# EUROPEAN PATENT APPLICATION

(11) **EP 4 346 259 A1**
(43) Date of publication of application: **03.04.2024**
(21) Application number: 23306642.2
(22) Date of filing: 29.09.2023
(51) Int. Cl.: H04W 12/65, H04W 12/08

(54) **METHOD FOR SHARING DATA**

(30) Priority: 30.09.2022 WO PCT/CN2022/123070
(71) Applicant: Orange, 92130 Issy-les-Moulineaux (FR)
(72) Inventor: GUO, Zhihong, Beijing 100013 (CN); YE, Nan, Beijing 100013 (CN)
(74) Representative: Regimbeau

(57) **Abstract**

Method for sharing data between a publisher device (1) and at least one customer device (2), the method comprising the steps, performed by a processing unit (10) of the publisher device (1), of:
a) receiving, from a customer device (2), a request for obtaining the data from the publisher device (1), the request comprising customer image data related to a customer image of a given scene;
b) determining a similarity score between the customer image data and publisher image data related to a publisher image stored in the publisher device (1);
c) depending on the similarity score, sending the data to the customer device (2).

## Description

### TECHNICAL FIELD

The field of this invention is that of sharing data between electronic devices.

### TECHNICAL BACKGROUND

Mobile terminal such as smartphones are widely used for sharing data. More particularly, when people want to share data, sometimes, using mobile phones to transmit the message is pretty easier and more efficient than talking to others, even if they are in the same place physically.

For example, when a group of people physically together want to use the Wi-Fi hotspot provided by the device of one of the members of the group, it is laborious for the Wi-Fi provider to share the credentials needed by the members of the group who want to connect their device to the Wi-Fi hotspot.

One solution is to share the credentials through a QR code generated by the device of the Wi-Fi provider. The Wi-Fi provider must successively pass their phone to the other members of the group so that the latter can scan the QR code to obtain the credentials. This is time-consuming and it consumes battery power of the Wi-Fi provider device which screen must remain unlocked.

Another solution is to create a chat group using a specific application including all the members of the group and sending in the chat group the credentials. Thus, an application used by all of the members of the group must be determined. Some members might be obligated to download an application only to obtain the credentials. Furthermore, this is time-consuming, the members of the group must connect to the Wi-Fi hotspot manually and the newly created chat group might be used once and useless for the future.

### SUMMARY OF THE DISCLOSURE

There is consequently a need for a method allowing to easily and efficiently share data between electronic devices.

According to a first aspect, there is provided a method for sharing data between a publisher device and at least one customer device, the method comprising the steps, performed by a processing unit of the publisher device, of:
a) receiving, from a customer device, a request for obtaining the data from the publisher device, the request comprising customer image data related to a customer image of a given scene;
b) determining a similarity score between the customer image data and publisher image data related to a publisher image stored in the publisher device;
c) depending on the similarity score, sending the data to the customer device.

According to advantageous and non-limiting features, taken alone or in any combination:
- the method comprises a preliminary step a0) wherein acquisition means of the publisher device acquire the publisher image and the processing unit of the publisher device generates the publisher image data from the publisher image;
- the method comprises a step a2) wherein the processing unit of the publisher device hashes the publisher image to obtain the publisher image data, the publisher image data being a hash code of the publisher image;
- wherein the publisher device is in the vicinity of the customer device and exchanges with the customer device via a short-range wireless connection;
- wherein the customer image and the publisher image are images of a scene of the surroundings of the publisher device;
- wherein the data comprises credentials for getting access to a service and the data is used by the customer device to get access to said service;
- wherein, in step c), the similarity score is compared to a threshold and the publisher device sends the data to the customer device depending of the results of the comparison.

According to another aspect, there is provided a method for receiving data from a publisher device on a customer device, the publisher device being in the vicinity of the customer device, the method comprising the steps, performed by a processing unit of the customer device, of:
a) acquiring a customer image of a given scene;
b) sending a request for obtaining data from the publisher device, the request comprising customer image data related to said customer image;
c) receiving the data from the publisher device, said data being sent to said customer device depending on a similarity score between the customer image data and publisher image data related to a publisher image stored in the publisher device.

According to advantageous and non-limiting features, taken alone or in any combination:
- the method comprises a preliminary step a1) wherein the acquisition means of the customer device acquire the customer image and a processing unit of the customer device generates the customer image data from the customer image;
- the method comprises a step a11) wherein the processing unit of the customer device hashes the customer image to obtain the customer image data, the customer image data being a hash code of the customer image;
- the method comprises a step d) wherein the data is displayed by an interface of the customer device and/or used in an application installed on the customer device.

According to another aspect, there is provided a publisher device adapted to share data with at least one customer device comprising acquisition means and a processing unit configured to:
- receive, from a customer device, a request for obtaining the data from the publisher device, the request comprising customer image data related to a customer image of a given scene;
- determine a similarity score between the customer image data and publisher image data related to a publisher image stored in the publisher device;
- depending on the similarity score, send the data to the customer device.

According to another aspect, there is provided a customer device adapted for receiving data from a publisher device in its vicinity, said customer device comprising acquisition means and a processing unit configured to:
- acquire a customer image of a given scene;
- sending a request for obtaining data from the publisher device, the request comprising customer image data related to said customer image;
- receive the data from the publisher device, said data being sent to said customer device depending on a similarity score between the customer image data and publisher image data related to a publisher image stored in the publisher device.

According to another aspect, there is provided a computer program product, comprising code instructions for executing a method for sharing data previously presented for operating a publisher device to share data with at least one customer device or for executing a method for receiving data previously presented for operating a customer device for receiving data from a publisher device, when run on computer means.

### BRIEF DESCRIPTION OF THE FIGURES

Further features and advantages will be described in the following description, based on the appended drawings, in which:
- figure 1 schematically illustrates devices between which sharing data might be performed;
- figure 2 schematically illustrates successive steps of a method for sharing data;
- figure 3 schematically illustrates steps of acquiring images in the context of a method for sharing data; and
- figure 4 schematically illustrates devices, hash codes of the images displayed by the devices and similarity scores calculated in the context of a method for sharing data.

### DETAILED DESCRIPTION OF EMBODIMENTS

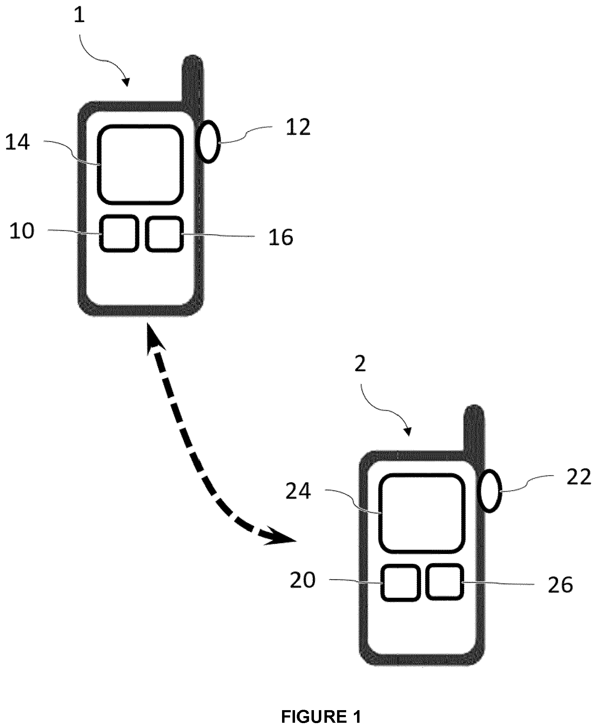

There is provided a method for sharing data between a publisher device 1 and at least one customer device 2 illustrated in **figure 1****.**

The method is particularly useful for securely sharing data and is thus useful for sharing sensitive data. By "sensitive data", it is meant data that the user of the publisher device 1 wants to share with specific customer device(s) 2. In other terms, the user of the publisher device 1 wants to be sure that the sensitive data will be accessed by only specific customer device(s) 2. Advantageously, the users of the customer device(s) are physically close to the user of the publisher device 1.

The data may be alphanumeric data, images, videos, etc. The data may be, for example, credentials to access a service such as Wi-Fi credentials allowing to connect to a Wi-Fi network.

### System

The system illustrated on figure 1 comprises a publisher device 1 and a customer device 2. The publisher device 1 is an electronic device, typically a smartphone, a tablet, a digital camera or any other personal terminal of a user. It comprises at least a publisher processing unit 10 (typically a processor). The publisher device 1 also comprises publisher acquisition means 12 for acquiring images comprising at least one built-in camera. The publisher device 1 also preferably comprises a publisher interface 14 (typically a screen, possibly touch sensitive) and a publisher storage unit 16 (a memory, for instance flash memory).

The publisher processing unit 10 is preferably configured to process images to generate data representative of the images. Thus, the publisher processing unit 10 is preferably configured to hash images. In other terms, the publisher processing unit 10 is preferably configured to obtain hash codes from images. The publisher processing unit 10 may be configured to obtain any other data from an image such as, for example, key points or plain text. The publisher processing unit 10 is thus preferably configured to run hash algorithm. A hash algorithm may be, for example, p-Hash algorithm. As another example, the publisher processing unit 10 may be configured to run key points extracting algorithm or artificial intelligence algorithm.

Similarly to the publisher device 1, the customer device 2 is an electronic device, typically a smartphone, a tablet, a digital camera or any other personal terminal of a user. It comprises at least a customer processing unit 20 (typically a processor). The customer device 2 also comprises customer acquisition means 22 for acquiring images comprising at least one built-in camera. The customer device 2 also preferably comprises a customer interface 24 (typically a screen, possibly touch sensitive) and a customer storage unit 26 (a memory, for instance flash memory).

Also, similarly to the publisher processing unit 10, the customer processing unit 20 is preferably configured to process images to generate data representative of the images.

The publisher device 1 and the customer device 2 are configured to establish short range wireless connections. Advantageously, the publisher device 1 and the customer device 2 are configured to establish Bluetooth connections. The publisher device 1 and the customer device 2 may be configured to establish other types of short-range wireless connections such as ultra wideband connection (UWB), Wi-Fi connection or ZigBee connection.

Advantageously, the publisher device 1 is configured to create short range wireless connections which are dedicated to specific customer device(s) 2.

The publisher device 1 is so named (i.e. comprises the term "publisher") to express the fact that the publisher device 1 is adapted to share data with other devices, especially the customer device(s) 2. Advantageously, the publisher device 1 is provided with an application software dedicated for the performing of the method for sharing data.

Similarly, the customer device 2 is so named (i.e. comprises the term "customer") to express the fact that the customer device 2 is adapted to receive data from other devices, especially the publisher device 1. Advantageously, the customer device 2 is provided with an application software dedicated for the receiving of data which is sent by the publisher device 1 according to the method for sharing data.

More precisely, the publisher device 1 and the customer device 2 are preferably provided with the same application software. Advantageously, the application software offers two modes: a publisher mode and a customer mode. The publisher device 1 is provided with the application software running under the publisher mode and the customer device 2 is provided with the application software running under the customer mode.

As explained, an application software dedicated for the performing of the method can be installed on the publisher device 1 and on the customer device 2. The application software may implement an image acquisition module which calls for the acquisition means 16, 26 of the devices 1, 2. The application software may also comprise an application storage module which allows a user to access images acquired via the acquisition module. The images available on the application software storage module may be stored on a remote server linked to the application software.

The application software, as explained, can offer two modes: a publisher mode and a customer mode. Thus, the user can activate the desired mode depending on what the user wants to do.

The application software may comprise a hash code algorithm that the publisher processing unit 10 can perform.

### Method

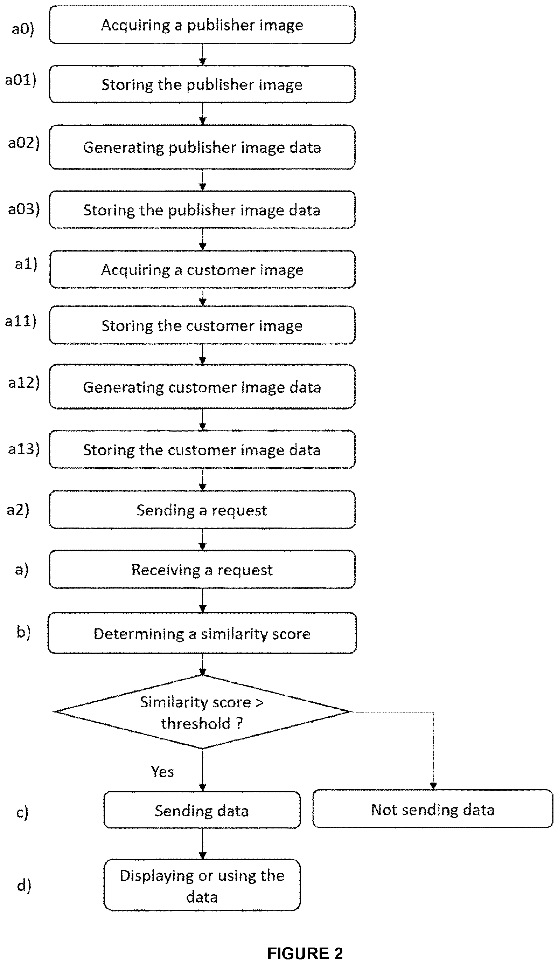

A method for sharing data between a publisher device 1 and at least one customer device 2 is illustrated in **figure 2****.**

More precisely, the method advantageously takes place in a situation wherein a first person, named publisher, wants to easily share data with at least one other person, named customer, everyone being in the same place.

By "in the same place", it is meant that the publisher is in the vicinity of the customer. Preferably, the publisher is within 20 meters of the customer, more preferably within 10 meters, and even more preferably within 3 meters. For example, the publisher and the customer may be eating together at the same table.

As a consequence, the publisher and the customer have the same surroundings. In other terms, they have visually access to the same things that surround them. Hence, the publisher and the customer are able to acquire images of the same scene of the surroundings. For this purpose, they just need to acquire an image from a substantially same viewing angle which is possible given the fact that they are in the same place.

The publisher, who is the user of the publisher device 1, will use its publisher device 1 to share data with the customer device 2.

Briefly, the method of sharing data is based on the fact that a customer device 2 will be allowed to receive data from the publisher device 1 if a particular image sent by the customer device 2 to the publisher device 1 is sufficiently similar to an image of reference held by the publisher device 1. The image of reference, named publisher image in the following, is preferably an image taken by the publisher in the place where the publisher and the customer are together. In other terms, the customer needs to acquire an image similar to the publisher image. For this purpose, the customer needs to be advised by the publisher about what the publisher image represents and the customer needs to be in the same place where the publisher acquired the publisher image. Consequently, data is shared by the publisher only to customers allowed (i.e. by the publisher) to receive said data.

### Publisher

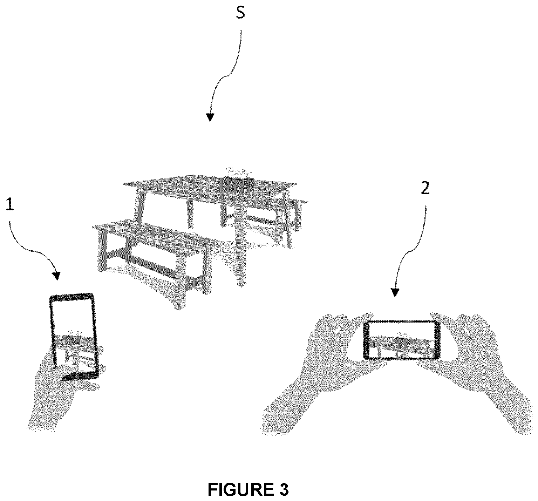

The method preferably comprises a preliminary step a0) wherein the acquisition means 12 of the publisher device 1 acquire a publisher image. More particularly, the user of the publisher device 1 takes an image of a scene of the surroundings, using the acquisition means 12 of the publisher device 1. Said scene S of the surroundings could comprise any object or people located in the surroundings. With the example illustrated on **figure 3****,** the picture of the surroundings comprises a table, benches and a towel box.

Preferably, the publisher image is not too simple. In other terms, the publisher image represents a scene comprising object(s) and/or people and does not only represent a onecolor background. Indeed, in order to make sure that the customer is a user with whom the publisher really wants to share data, the publisher image should not be too simple. Otherwise, some customers could be able to access the data by acquiring an image similar to the publisher image by chance.

Preferably, the publisher image is centred on one or several specific elements (object(s), people, any natural elements such as a tree...) of the surroundings. This way, it will be easier for the publisher to indicate to customers how to acquire an image that is similar to the publisher image.

The publisher image can be acquired directly via a camera application installed on the publisher device 1 or via the acquisition module of the application software.

In a step a01), the publisher image may be preferably stored. It may be stored into the publisher storage means 16 of the publisher device 1 or on a remote server linked to the application software.

Advantageously, in a step a02), the processing unit 10 of the publisher device 1 may advantageously generate publisher image data (PID) from the publisher image. Such publisher image data PID comprises data related to the publisher image. In other terms, the publisher image is processed to obtain publisher image data, these publisher image data usually having a much smaller size than the publisher image itself so that these data are easier to compare and/or to share with a customer device, for instance through an advertising protocol such as a Bluetooth advertising protocol.

Preferably, the publisher image data PID is a hash code of the publisher image. The publisher processing unit 10 performs a hash algorithm to calculate a hash code of the publisher image. In another embodiment, the publisher image data is a group of key points extracted from the publisher image using a key points extracting algorithm, for example the Speeded Up Robust Features (SURF) algorithm. Also in another embodiment, the publisher image data comprises plain text generated from the publisher image using an artificial intelligence algorithm such as object detection algorithms or image captioning algorithms.

The size of publisher image data is small enough to be shared with a customer device, for instance through an advertising protocol such as a Bluetooth advertising protocol. Therefore, in an advantageous embodiment where the publisher image data is transmitted using a specific transmission protocol which defines a maximum length of a data packet (in bytes), the publisher image data is generated in such a way that its size (e.g. its length in bytes) is smaller than this maximum length, so that the publisher image data can be transmitted in a single data packet according to this specific transmission protocol.

For instance, in an embodiment where a Bluetooth advertising protocol is used by the publisher device 1, the maximum length of a Bluetooth advertising data packet is typically 31 bytes. With such an advertising protocol, even a small image is too large to be transmitted in a single data packet (e.g. an image with 480x360 in size and black and white colour, in JPEG format, has 950 bytes in total, which far exceeds this maximum length). However, by generating a publisher image data with a size lower than 31 bytes, this publisher image data can be transmitted in a single Bluetooth advertising data packet. For that purpose, the publisher image data can be a hash code of the publisher image, generated by a p-hash algorithm, which usually has a size between 16 and 24 bytes.

Any algorithm used to obtain the publisher image data from the publisher image can be provided by the application software.

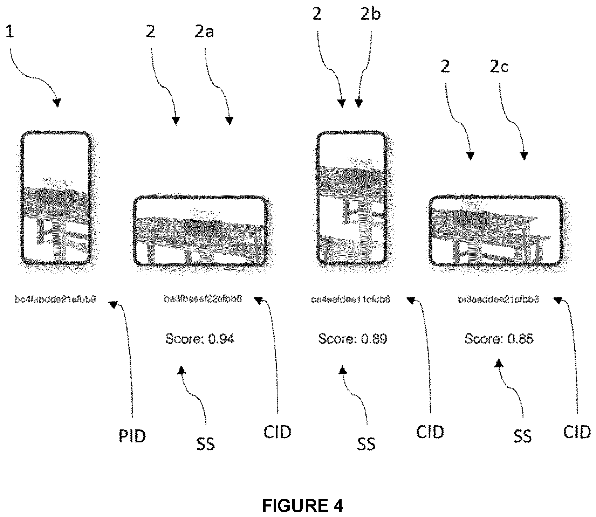

The publisher image data PID is for example alphanumeric data as illustrated in **figure 4****.** The publisher image data may also be, for example, a group of key points or plain text.

In a step a03), the publisher image data is preferably stored. It may be stored into the publisher storage means 16 of the publisher device 1 or on a remote server linked to the application software. Thus, one same publisher image data can be used in the context of the performing of sharing data by the publisher device 1. In other terms, this publisher image data may be used in the context of sharing data between the publisher device 1 and different customer devices 2. Also, this publisher image data PID may be used for sharing successively different data between the publisher device 1 and a customer device 2.

### Customer Device

The method also preferably comprises a preliminary step a1) wherein the acquisition means 22 of the customer device 2 acquire a customer image. More particularly, the user of the customer device 2 takes a picture of a scene S of their surroundings using the acquisition means 26 of the customer device 2 as illustrated in figure 3.

The publisher and the customer being at the same location, said publisher can provide orally indication to the customer as to the specific elements on which the image to be acquired by the customer is to be centred, so the publisher image and the customer will be similar.

The customer image can be acquired directly via a camera application installed on the customer device 2 or via the acquisition module of the application software.

In a step a11), the customer image may be preferably stored. It may be stored into the customer storage means 26 of the customer device 2 or on a remote server linked to the application software.

Advantageously, in a step a12) the processing unit 20 of the customer device 2 may advantageously generate customer image data (CID) from the customer image. Such customer image data CID comprise data related to the customer image. In other terms, the customer image is processed to obtain customer image data, these customer image data usually having a much smaller size than the customer image itself so that these data are easier to compare and/or to share with the publisher device, for instance through an advertising protocol such as a Bluetooth advertising protocol.

Here also, similarly to what was previously explained in relation to the publisher image data, in an advantageous embodiment where the customer image data is transmitted using a specific transmission protocol which defines a maximum length of a data packet (in bytes), the customer image data is generated in such a way that its size (e.g. its length in bytes) is smaller than this maximum length, so that the customer image data can be transmitted in a single data packet according to this specific transmission protocol, which may be a Bluetooth advertising protocol, typically with the same maximum length and size values as previously explained. In that case, here also, the customer image data can be a hash code of the customer image, generated by a p-hash algorithm, which usually has a size between 16 and 24 bytes

Preferably, the customer image data CID is a hash code of the customer image. The customer processing unit 20 performs a hash algorithm to calculate a hash code of the customer image. In other embodiments, similarly to the publisher image data PID, the customer image data CID may be a group of key points extracted from the customer image or may comprise plain text generated from the customer image.

Advantageously, the algorithm performed by the customer processing unit 20 to generate the customer image data is the same as the algorithm performed by the publisher processing unit 10 to calculate the publisher image data.

Any algorithm used to obtain the customer image data from the customer image can be provided by the application software.

The customer image data CID is for example alphanumeric data as illustrated in figure 4. As for the publisher image data, the customer image data may also be, for example, a group of key points or plain text.

In a step a13), the customer image data is preferably stored. It may be stored into the customer storage means 26 of the customer device 2 or on a remote server linked to the application software.

### Exchanges between the publisher and the customer device

Referring again to figure 2, the method comprises a step a) wherein the publisher processing unit 20 receives, from a customer device 2, a request for obtaining data from the publisher device 1.

Thus, in this step a), a customer device 2 sends to the publisher device 1 a request for obtaining data. To do so, in an embodiment, the customer device may broadcast a request for obtaining data which will be received by surrounding devices, comprising the publisher device 1.

This request encapsulates the customer image data (CID) and is broadcasted to any publisher in the neighbourhood using a short-range wireless protocol, such as Bluetooth or any other protocol here above mentioned.

The request comprises at least the customer image data. Hence, the publisher device 1 receives the customer image data.

Several customer devices 2a, 2b, 2c may wish to obtain data from the publisher device 1. Thus, several customer devices 2a, 2b, 2c may send requests with their own customer image data to be checked by one publisher device 1. c. In this case, the publisher device 1 may for example process the requests in their chronological order of receipt. In other terms, the data may be accessible to any customer device 2 which will send to the publisher device 1 customer image data which is sufficiently similar to the publisher image data (the meaning of "sufficiently" will be detailed in the following).

After receiving a request, the publisher processing unit 20 determines a similarity score (step b)) between the customer image data and the publisher image data. In other terms, the publisher processing unit 20 compares the customer image data and the publisher image data. Step b) aims at determining if the customer image data and the publisher image data are similar and, thus, if the customer image and the publisher image are similar.

For that matter, the publisher processing unit 20 may calculate a similarity score using known methods. For example, the publisher processing unit 20 may run a scale invariant feature transform (SIFT) algorithm. In another example where a p-hash algorithm has been used to generate publisher and customer image data as hash codes of publisher and customer images, calculating the similarity score of these two hash code may consist in comparing these m bit by bit. For example, if each hash code is 16 bytes long, there will be 16 x 8 = 128 bits in each hash code. Assuming that 120 bits are the same in both hash codes, the similarity score will be 120/128 = 0.94. As another example, the Quadtree algorithm may be used to compare key points when publisher and customer image data comprise such key points of publisher and customer images.

Here, it is wanted to verify that the customer image is similar to the publisher image which would prove that the user of the customer device 2 knows (certainly from the user of the publisher device 1) what the customer image must represent to be considered similar to the publisher image (and thus, how to acquire the customer image, i.e. with which viewing angle) and that the user of the customer device 2 is physically at the same place where the user of the publisher device 1 is.

Hence, only the users of customer devices 2 who are with the user of the publisher device 1 and who are informed by the user of the publisher device 1 about what the customer image must look like to be considered similar to the publisher image 1 can acquire a customer image which will be considered similar to the publisher image.

Thus, in a step c), the similarity score and a threshold are compared. The threshold is predetermined. It is considered that, if the similarity score is greater than the threshold, the customer image data and the publisher image data are similar and, as a consequence, so are the customer image and the publisher image.

In step c), if the similarity score is greater than the threshold, the publisher processing unit 20 sends the data to the customer device 2. Indeed, as explained, if the similarity score is greater than the threshold, it means that the customer image and the publisher image are deemed similar. This means that the user of the customer device 2 is considered as being an authorized person for obtaining the data by the user of the publisher device 1 since the user of the customer device 2 has known what the customer image must represent and look like.

To this end, the publisher processing unit 10 creates a short-range wireless connection which is dedicated to the authorized customer device 1. By "dedicated" it is meant that a specific communication channel is created for the publisher device 1 and the authorized customer device 2. This connection is established using the short-range protocol by which the customer sent its initial request.

Then, still in step c), the publisher processing unit 10 sends the data via this short-range wireless connection.

Hence, the data is sent only to the authorized devices (i.e. the customer devices 2 that the publisher device 2, and thus the user of the publisher device 2, agrees to receive the data). The sending is secure.

However, if the similarity score is not greater than the threshold, the customer image and the publisher image are considered not to be similar. This probably means that the user of the customer device 2 does not know how to acquire the customer image (i.e. what the customer image must represent) meaning that the user of the publisher device 1 did not inform the user of the customer device 2 about how to acquire the customer image. This probably means that the user of the publisher device 1 does not want the user of the customer device 2 to obtain the data.

As a consequence, in this case the data is not sent to the customer device 2.

For example, as illustrated in figure 4, a similarity score SS has been calculated for each customer image data CID. The similarity scores SS characterizes the similarity between the publisher image data PID and each customer image data CID. Let us imagine that the threshold is equal to 0,9. Thus, only the similarity score SS associated with the customer image data CID of the customer device 2a is greater than the threshold. Hence, data will be sent by the publisher device 1 to the customer device 2a. However, no data will be sent to the customer device 2b and 2c.

Preferably, if the data have been sent to the customer device 2, the method comprises a step d) wherein the data is displayed by the customer interface 24 of the customer device 2 and/or used in an application installed on the customer device 2.

For example, if the data comprises a picture or a video, the picture may be displayed by the customer interface 24. The data may also comprise credentials which are displayed by the customer interface 24 and the user of the customer device 2 may copy and paste the credentials to access a service.

The data may also directly be used in an application installed on the customer device 2. Indeed, the customer processing unit 20 may detect that the data is intended to be used by a specific application. For example, the data may comprise credentials to access a Wi-Fi hotspot and the credentials may be automatically used in the Wi-Fi connection tool of the customer device 2 to get access to the Wi-Fi connection. The data may also comprise an URL of a website which can be automatically used by a web browser application of the customer device 2 to access the website. The data may be of any kind and the invention is not limited to the proposed examples.

It is finally reminded that the method can be implemented via a specific application installed on the devices 1, 2. Depending on what a user wants to perform, they may choose between a "publisher" or "customer" mode.

The invention is not limited to the embodiment described and shown in the attached figures. Modifications remain possible, in particular with respect to the constitution of the various technical features or by substitution of technical equivalents, without however leaving the general teaching.

## Claims

1. Method for sharing data between a publisher device (1) and at least one customer device (2), the method comprising the steps, performed by a processing unit (10) of the publisher device (1), of:
a) receiving, from a customer device (2), a request for obtaining the data from the publisher device (1), the request comprising customer image data (CID) related to a customer image of a given scene (S);
b) determining a similarity score between the customer image data (CID) and publisher image data (PID) related to a publisher image stored in the publisher device (1);
c) depending on the similarity score, sending the data to the customer device (2).

2. Method according to claim 1, comprising a preliminary step a0) wherein acquisition means (12) of the publisher device (1) acquire the publisher image and the processing unit (10) of the publisher device (1) generates the publisher image data (PID) from the publisher image.

3. Method according to claim 2, comprising a step a2) wherein the processing unit (10) of the publisher device (1) hashes the publisher image to obtain the publisher image data (PID), the publisher image data (PID) being a hash code of the publisher image.

4. Method according to any one of claims 1 to 3, wherein the publisher device (1) is in the vicinity of the customer device (2) and exchanges with the customer device (2) via a short-range wireless connection.

5. Method according to claim 4, wherein the customer image and the publisher image are images of a scene (S) of the surroundings of the publisher device (1).

6. Method according to any one of claims 1 to 5, wherein the data comprises credentials for getting access to a service and the data is used by the customer device (2) to get access to said service.

7. Method according to any one of claims 1 to 6, wherein, in step c), the similarity score is compared to a threshold and the publisher device (1) sends the data to the customer device (2) depending of the results of the comparison.

8. Method for receiving data from a publisher device (1) on a customer device (2), the publisher device (1) being in the vicinity of the customer device (2), the method comprising the steps, performed by a processing unit (20) or by acquisition means (22) of the customer device (2), of:
a) acquiring a customer image of a given scene (S);
b) sending a request for obtaining data from the publisher device (1), the request comprising customer image data (CID) related to said customer image;
c) receiving the data from the publisher device (1), said data being sent to said customer device (2) depending on a similarity score between the customer image data (CID) and publisher image data (PID) related to a publisher image stored in the publisher device (1).

9. Method according to claim 8, comprising a preliminary step a1) wherein the acquisition means of the customer device (2) acquire the customer image and a processing unit of the customer device (2) generates the customer image data (CID) from the customer image.

10. Method according to any one of claims 8 and 9, comprising a step a11) wherein the processing unit (20) of the customer device (2) hashes the customer image to obtain the customer image data (CID), the customer image data (CID) being a hash code of the customer image.

11. Method according to any one of claims 8 to 10, comprising a step d) wherein the data is displayed by an interface of the customer device (2) and/or used in an application installed on the customer device (2).

12. A publisher device (1) adapted to share data with at least one customer device (2) comprising acquisition means (12) and a processing unit (10) configured to:
- receive, from a customer device (2), a request for obtaining the data from the publisher device (1), the request comprising customer image data (CID) related to a customer image of a given scene (S);
- determine a similarity score between the customer image data (CID) and publisher image data (PID) related to a publisher image stored in the publisher device (1);
- depending on the similarity score, send the data to the customer device (2).

13. A customer device (2) adapted for receiving data from a publisher device (1) in its vicinity, said customer device (2) comprising acquisition means (22) and a processing unit (20) configured to:
- acquire a customer image of a given scene (S) ;
- sending a request for obtaining data from the publisher device (1), the request comprising customer image data (CID) related to said customer image;
- receive the data from the publisher device (1), said data being sent to said customer device (2) depending on a similarity score between the customer image data (CID) and publisher image data (PID) related to a publisher image stored in the publisher device (1).

14. A computer program product, comprising code instructions for executing a method according to any one of claims 1 to 7 for operating a publisher device (1) to share data with at least one customer device (2) or for executing a method according to any one of claims 8 to 11 for operating a customer device (2) for receiving data from a publisher device (1), when run on computer means.
